# EUROPÄISCHE PATENTSCHRIFT

(11) **EP 1 406 934 B1**
(45) Veröffentlichungstag und Bekanntmachung des Hinweises auf die Patenterteilung: **09.04.2008**
(21) Anmeldenummer: 02782447.3
(22) Anmeldetag: 02.07.2002
(51) Int. Cl.: C08F 10/10

(54) **POLYISOBUTEN-ZUSAMMENSETZUNG**
POLYISOBUTENE COMPOSITION
COMPOSITION DE POLYISOBUTENE

(30) Priorität: 04.07.2001 DE 10132337
(43) Veröffentlichungstag der Anmeldung: 14.04.2004
(73) Patentinhaber: BASF SE, 67056 Ludwigshafen (DE)
(72) Erfinder: AUER, Heinz, 68809 Neulussheim (DE); BORCHERS, Dirk, B-2950 Kapellen (BE); WETTLING, Thomas, 67117 Limburgerhof (DE)
(74) Vertreter: Reitstötter - Kinzebach
(86) Internationale Anmeldenummer: PCT/EP2002/007305
(87) Internationale Veröffentlichungsnummer: WO 2003/004540

(56) Entgegenhaltungen:
- EP-A- 0 320 263
- EP-A- 0 579 058
- WO-A-00/08075
- GB-A- 432 196
- US-A- 5 844 056

## Beschreibung

Die vorliegende Erfindung betrifft eine Polyisobuten-Zusammensetzung, ein Verfahren zur Herstellung von Polyisobuten und ein Verfahren zur Verringerung der Viskosität von Polyisobutenen.

Polyisobutene mit einem Maximum der Molekulargewichtsverteilung von 3500 bis 8000 Dalton (entsprechend etwa einem zahlenmittleren Molekulargewicht von 1900 bis 4000) und vorzugsweise einem hohen Gehalt an endständigen Vinylidengruppierungen sind als Zwischenprodukte zur Herstellung von Additiven für Schmier- und Kraftstoffe begehrt. Ihre Herstellung gelingt durch Lewis-Säure-katalysierte Polymerisation von Isobuten. Als Lewis-Säure-Katalysator wird häufig Bortrifluorid, meist in Kombination mit einer zur Komplexbildung mit Bortrifluorid befähigten Verbindung, verwendet. Die Polymerisation erfolgt im Allgemeinen in Gegenwart eines inerten Verdünnungsmittels, wie n-Hexan. Sobald der gewünschte Polymerisationsgrad erreicht ist, wird der Katalysator entfernt und/oder inaktiviert, und nicht umgesetztes Isobuten und das inerte Verdünnungsmittel werden durch Abdestillieren entfernt. Ein derartiges Verfahren ist z. B. in der US 5,408,018 offenbart.

Die älteren Patentanmeldungen DE 199 48 947.5, DE 199 52 031.3, DE 199 52 030.5, DE 100 28 585.6 und DE 100 35 298.7 betreffen Verbesserungen oder vorteilhafte Ausgestaltungen derartiger Verfahren.

Bei der Herstellung von Polyisobutenen mit einem Maximum der Molekulargewichtsverteilung im Bereich von 3500 bis 8000 macht sich beim Abdestillieren des nicht umgesetzten Isobutens und/oder des inerten Verdünnungsmittels die hohe Viskosität dieser Polyisobutene störend bemerkbar. So bilden diese Polyisobutene äußerst zähflüssige Grenzschichten an den Wandungen von Behältern oder Rohrleitungen, die als thermischer Isolator wirken und die Wärmeübertragung behindern. Um die letzten Anteile von nicht umgesetztem Isobuten und/oder inertem Verdünnungsmittel abzudestillieren, muss daher eine hohe Heiztemperatur gewählt werden, wobei allerdings die Gefahr besteht, das Polyisobuten thermisch zu schädigen. Außerdem führt die hohe Viskosität des Destillationsguts zur Bildung eines hartnäckigen Schaums, der die Güte der destillativen Trennung beeinträchtigt.

Die bereits bei erhöhter Temperatur hohe Viskosität der Polyisobutene nimmt beim Abkühlen noch weiter zu, so dass bei Raumtemperatur Produkte erhalten werden, die kaum mehr maschinell handhabbar, d. h. nicht mehr zu pumpen und zu fördern, sind.
Die EP-A 0 579 058 und EP-A 0 320 263 offenbaren Butylkautschuke mit bimodaler Molekulargewichtsverteilung. Die US-A 5,844,056 beschreibt Sternpolymere mit mehreren Polyisobutylen-Armen.

Der vorliegenden Erfindung liegt die Aufgabe zugrunde, die mit der hohen Viskosität der Polyisobutene mit einem Maximum der Molekulargewichtsverteilung von 3500 bis 8000 verbundenen Probleme beim Abdestillieren des nicht umgesetzten Isobutens und/oder des inerten Verdünnungsmittels und bei der Handhabung der Endprodukte zu vermeiden.

Es wurde nun überraschenderweise gefunden, dass niedermolekulare Isobutenoligomere vorteilhafte Eigenschaften als Fließ- und Siedehilfsmittel für höhermolekulare Polyisobutene aufweisen. Die Polyisobutenoligomere zeigen bereits in geringer Konzentration eine ausgeprägte viskositätsverringernde und den Siedeverlauf vergleichmäßigende Wirkung. Sie haben außerdem den Vorteil, dass ihr chemischer Charakter dem der höhermolekularen Polyisobutene ähnelt, so dass sie vielfach im Produkt verbleiben können, ohne dass sich ihre Gegenwart störend auf anschließende chemische Umsetzungen der Polyisobutene auswirkt. Dies ist bei anderen, systemfremden Hilfsmitteln nicht ohne Weiteres der Fall.

In einem ersten Aspekt betrifft die Erfindung daher eine Polyisobuten-Zusammensetzung mit einem globalen Maximum der differentiellen Molekulargewichtsverteilungskurve bei einem Molekulargewicht Mₘₐₓ im Bereich von 3500 bis 8000, insbesondere 3800 bis 6000, besonders bevorzugt 4000 bis 5000, die durch wenigstens ein lokales Maximum bei einem Molekulargewicht von 112 bis 560, insbesondere 168 bis 392, gekennzeichnet ist.

Vorzugsweise werden mehr als 80 Gew.-% der Zusammensetzung von Molekülen mit einem Molekulargewicht im Bereich des 0,25- bis 2,5-fachen von Mₘₐₓ gebildet. Die Fläche unter den lokalen Maxima entspricht vorzugsweise 0,1 bis 12 Gew.-%, insbesondere 0,2 bis 10 Gew.-%, der Zusammensetzung. Als "Fläche unter den lokalen Maxima" wird die von der tatsächlichen Verteilungskurve und einer extrapolierten Verteilungskurve ohne lokale Maxima (wie sie z. B. grafisch oder unter zugrundelegung einer Schulz-Flory-Verteilung aus dem Kurvenverlauf oberhalb eines Molekulargewichts von 560 extrapoliert werden kann) im Bereich von Molekulargewichten von 112 bis 560 eingeschlossene Fläche betrachtet.

In einem zweiten Aspekt betrifft die Erfindung ein Verfahren zur Herstellung von Polyisobuten, bei dem man Isobuten in Gegenwart eines Lewis-Säure-Katalysators und eines inerten Verdünnungsmittels polymerisiert, bis ein Isobutenpolymerisat mit einem Maximum der differentiellen Molekulargewichtsverteilungskurve bei einem Molekulargewicht Mₘₐₓ von 3500 bis 8000 erhalten ist, den Katalysator abtrennt und/oder deaktiviert, und das nicht umgesetzte Isobuten und/oder das Verdünnungsmittel durch Destillation abtrennt, wobei man vor oder im Verlauf der Destillation zu dem Isobutenpolymerisat Isobutenoligomere mit einem Molekulargewicht von 112 bis 560, vorzugsweise 168 bis 392, zugibt.

Man kann die Viskosität eines Isobutenpolymerisats mit einem Maximum der differentiellen Molekulargewichtsverteilungskurve bei einem Molekulargewicht Mₘₐₓ von 3500 bis 8000 durch Zusatz von Isobutenoligomeren mit einem Molekulargewicht von 112 bis 560, vorzugsweise 168 bis 392 verringern.

Die Isobutenoligomere werden geeigneterweise in einer Menge von 0,1 bis 12 Gew.-%, vorzugsweise 0,2 bis 10 Gew.-%, zu dem Isobutenpolymerisat gegeben.

Unter "Isobutenoligomeren" sollen vorwiegend aus Isobuten-Wiederholungseinheiten aufgebaute Moleküle mit 8 bis 40 Kohlenstoffatomen (entsprechend einem Molekulargewicht von 112 bis 560) verstanden werden, unter "Isobutenpolymeren" solche mit wenigstens 44 Kohlenstoffatomen.

Soweit in der vorliegenden Beschreibung und den Ansprüchen Mengen in Gew.-% angegeben sind, beziehen diese sich auf die Gesamtheit der in einer Zusammensetzung enthaltenen Isobutenpolymere und Isobutenoligomere. Die Zusammensetzung kann daneben wechselnde Mengen anderer Komponenten, wie Lösungs- oder Verdünnungsmittel, enthalten. Eine bevorzugte Ausführungsform der erfindungsgemäßen Polyisobuten-Zusammensetzung ist eine solche, die weniger als 0,5 Gew.-% an anderen Komponenten als Isobutenpolymere und -oligomere enthält.

Die differentielle Molekulargewichtsverteilungskurve ist die Auftragung des Gewichts einer Molekulargewichtsfraktion gegen das auf der Abszisse aufgetragene Molekulargewicht. Zur Bestimmung der molekularen Gewichtsverteilung ist das Verfahren der Größenausschlusschromatographie, zumeist als Gel-Permeations-Chromatographie bezeichnet, geeignet. Das Trennprinzip besteht darin, dass polymere Moleküle unterschiedlicher Größe unterschiedlich stark in die Poren eines als Trennphase verwendeten porösen Gels eindringen können. Nach entsprechender Kalibrierung und Detektion mit geeigneten Verfahren können Molekulargewichte und deren Gewichtsfraktion bestimmt werden. Zur Detektion der durch Gelpermeation getrennten Molekülfraktionen sind verschiedene Detektoren geeignet. Neben Detektoren, die auf molekulare Absorption, z. B. IR- und UV-Absorption, reagieren, kommen auch solche in Betracht, die Substanzen unabhängig von deren Absorptionseigenschaften detektieren können. Hierzu zählen Refraktionsindexdetektoren, Differentialviskosimeter und Laserstreulichtdetektoren.

Für die vorliegenden Zwecke ist besonders ein aus zwei hintereinandergeschalteten größenausschlusschromatographischen Trennsäulen und einem Refraktionsindes-Detektor bestehende System geeignet. Geeignete Messbedingungen sind wie folgt:
- 1. Säule:: 300 mm x 7,8 mm; Ultrastyragel 105 C (Firma Waters)
- 2. Säule:: 300 mm x 7,8 mm; Ultrastyragel 103 C (Firma Waters)
- Eluent:: Tetrahydrofuran
- Flussrate:: 1 ml/min
- Säulentemperatur:: 45 °C

Der Kurvenverlauf im Bereich niedriger Molekulargewichte bis zu etwa 600 kann ferner durch Gaschromatographie, z. B. mit einem Gaschromatographen des Typs HP 6890 von Hewlett-Packard mit Flammenionisationsdetektor und Nonan als innerem Standard, ermittelt werden.

Bei der Polymerisation von Isobuten in Gegenwart eines Lewis-Säure-Katalysators werden nicht Moleküle eines einheitlichen Molekulargewichts erhalten. Vielmehr wird eine Molekulargewichtsverteilung erhalten, die ein sichtbares Maximum Mₘₐₓ aufweist und sowohl zu höheren als auch niedrigeren Molekulargewichten abfällt. Eine erfindungsgemäße Polyisobuten-Zusammensetzung wird erhalten, indem man zu einem Isobutenpolymerisat mit Mₘₐₓ von 3500 bis 8000, wie es durch Polymerisation von Isobuten bis zum gewünschten Polymerisationsgrad erhalten wird, Isobutenoligomere gibt. Die Zugabe der Isobutenoligomeren erfolgt vorteilhaft im Zuge der Aufarbeitung, insbesondere vor oder während der Destillation, von Isobuten-Polymerisationsansätzen.

Die Polymerisation von Isobuten kann kontinuierlich oder diskontinuierlich erfolgen, erfolgt jedoch vorzugsweise kontinuierlich. Verfahren zur kontinuierlichen Polymerisation von Isobuten in Gegenwart von Lewis-Säure-Katalysatoren in inerten Verdünnungsmitteln sind an sich bekannt. Bei einem kontinuierlichen Verfahren wird kontinuierlich ein Teil der im Polymerisationsreaktor entstandenen Reaktionsmischung ausgetragen. Eine dem Austrag entsprechende Menge an Einsatzmaterialien, hier Isobuten bzw. Isobuten-haltiger Kohlenwasserstoff, wird dem Polymerisationsreaktor kontinuierlich zugeführt. Das Verhältnis von der im Polymerisationsreaktor befindlichen Stoffmenge zu der Menge, die ausgetragen wird, bestimmt sich durch das Umlauf/Zulauf-Verhältnis, das bei der kontinuierlichen Polymerisation von Isobuten zu Polyisobuten in der Regel im Bereich von 1000:1 bis 1:1, bevorzugt im Bereich von 500:1 bis 5:1 und insbesondere im Bereich von 200:1 bis 50:1 Vol./Vol. liegt. Die mittlere Verweildauer des zu polymerisierenden Isobutens im Polymerisationsreaktor kann fünf Sekunden bis mehrere Stunden betragen. Verweilzeiten von 1 bis 30 Minuten, insbesondere 2 bis 20 Minuten, sind besonders bevorzugt.

Die Polymerisation des Isobutens erfolgt in den üblichen Reaktoren, wie Rührkesseln, Rohr-, Rohrbündel- und Schlaufenreaktoren, wobei Schlaufenreaktoren, d. h. Rohr(bündel)reaktoren mit Rührkesselcharakteristik, bevorzugt sind. Besonders günstig sind Rohrreaktoren mit Rohrquerschnitten, die in Teilbereichen zu Turbulenzen führen.

Die Polymerisation wird in der Regel bei einer Polymerisationstemperatur im Bereich von -60 °C bis +40 °C, vorzugsweise unterhalb 0 °C, besonders bevorzugt im Bereich von -30 °C bis 0 °C und speziell im Bereich von -25 °C bis -5 °C durchgeführt. Die Polymerisationswärme wird entsprechend mit Hilfe einer Kühlvorrichtung abgeführt. Diese kann beispielsweise mit flüssigem Ammoniak als Kühlmittel betrieben werden. Eine andere Möglichkeit, die Polymerisationswärme abzuführen, ist die Siedekühlung. Dabei wird die freiwerdende Wärme durch teilweises Verdampfen des Reaktionsgemisches, z. B. des Isobutens und/oder anderer leicht flüchtiger Bestandteile des Isobutenzulaufs oder eines leicht flüchtigen Verdünnungsmittels abgeführt. Vorzugsweise arbeitet man unter isothermen Bedingungen, d. h. die Temperatur der flüssigen Reaktionsphase im Polymerisationsreaktor hat einen stationären Wert und ändert sich während des Betriebs des Reaktors nicht oder nur in geringem Maße.

Die Konzentration des Isobutens in der flüssigen Reaktionsphase liegt in der Regel im Bereich von 0,2 bis 50 Gew.-%, vorzugsweise im Bereich von 0,5 bis 20 Gew.-%, bezogen auf die flüssige Reaktionsphase.

Als Einsatzstoffe eignen sich sowohl Isobuten selbst als auch Isobuten-haltige C₄-Kohlenwasserstoffströme, beispielsweise C₄-Raffinate, C₄-Schnitte aus der Isobutan-Dehydrierung, C₄-Schnitte aus Steamcrackern, FCC-Crackern (fluid catalyzed cracking), sofern sie weitgehend von darin enthaltenem 1,3-Butadien befreit sind. Geeignete C₄-Kohlenwasserstoffströme enthalten in der Regel weniger als 500 ppm, vorzugsweise weniger als 200 ppm, Butadien. Die Anwesenheit von 1-Buten, cis- und trans-2-Buten ist weitgehend unkritisch und führt nicht zu Selektivitätsverlusten. Typischerweise liegt die Isobuten-Konzentration in den C₄-Kohlenwasserstoffströmen im Bereich von 20 bis 70 Gew.-%. Bei Einsatz von C₄-Schnitten als Einsatzmaterial übernehmen die von Isobuten verschiedenen Kohlenwasserstoffe die Rolle eines inerten Verdünnungsmittels. Der Isobuten-haltige Zulauf kann geringe Mengen an Kontaminanten, wie Wasser, Carbonsäuren oder Mineralsäuren enthalten, ohne dass es zu kritischen Ausbeute- oder Selektivitätseinbrüchen bei der Polymerisation kommt. Es ist zweckdienlich, eine Anreicherung dieser Verunreinigungen zu vermeiden, indem man solche Schadstoffe beispielsweise durch Adsorption und feste Adsorbentien, wie Aktivkohle, Molekularsieben oder Ionenaustauscher aus dem Isobuten-haltigen Zulauf entfernt.

Als inerte Verdünnungsmittel sind solche Lösungsmittel oder Lösungsmittelgemische geeignet, die gegenüber den eingesetzten Reagenzien inert sind. Geeignete Verdünnungsmittel sind beispielsweise gesättigte Kohlenwasserstoffe, wie Butan, Pentan, Hexan, Heptan, Octan, z. B. n-Hexan, i-Octan, Cyclopentan, halogenierte Kohlenwasserstoffe wie Methylenchlorid, Dichlormethan oder Trichlormethan sowie Mischungen der vorgenannten Verdünnungsmittel, wovon n-Hexan besonders bevorzugt ist. Vorzugsweise werden die Verdünnungsmittel vor ihrem Einsatz von Verunreinigungen wie Wasser, Carbonsäuren oder Mineralsäuren befreit, beispielsweise durch Adsorption an festen Adsorbentien, wie Aktivkohle, Molekularsieben oder Ionenaustauschern.

Als Lewis-Säure-Katalysator ist Bortrifluorid, vorzugsweise in Kombination mit einem Cokatalysator, besonders bevorzugt. Zweckmäßigerweise wird gasförmiges Bortrifluorid benutzt, wobei technisches, noch geringe Mengen Schwefeldioxid und SiF₄ enthaltendes, vorzugsweise aber hochreines Bortrifluorid mit einer Reinheit von etwa 99,5 Gew.-% verwendet werden kann.

Geeignete Cokatalysatoren sind in der Regel sauerstoffhaltige Verbindungen, die vorzugsweise wenigstens ein zweibindiges Sauerstoffatom aufweisen. Geeignete sauerstoffhaltige Verbindungen sind neben Wasser organische Verbindungen mit bis zu 30 Kohlenstoffatomen. Beispiele hierfür sind C₁-C₃₀-Alkanol und -Cycloalkanole, C₂-C₁₀-Diole, C₁-C₂₀-Carbonsäuren, C₄-C₁₂-Carbonsäureanhydride sowie C₂-C₂₀-Dialkylether. Hiervon sind C₁-C₂₀-Alkanole, insbesondere C₁-C₄-Alkanole bevorzugt, die gegebenenfalls zusammen mit C₂-C₂₀-Dialkylether eingesetzt werden können.

Als Cokatalysator sind einwertige sekundäre C₃-C₂₀-Alkanole besonders bevorzugt. Beispielhaft seien genannt Isopropanol, 2-Butanol, sec-Pentanol, sec-Hexanol, sec-Heptanol, sec-Octanol, und dergleichen. Besonders bevorzugt werden 2-Butanol und insbesondere Isopropanol verwendet.

Vorzugsweise beträgt das Molverhältnis von Bortrifluorid zu Cokatalysator 1:1 bis 1:10, insbesondere 1:1,1 bis 1:5 und besonders bevorzugt 1:1,2 bis 1:2,5.

Die Konzentration des Lewis-Säure-Katalysators im Reaktor liegt in der Regel im Bereich von 0,01 bis 1 Gew.-%, bezogen auf die flüssige Reaktionsphase, insbesondere im Bereich von 0,02 bis 0,7 Gew.-% und besonders bevorzugt im Bereich von 0,03 bis 0,5 Gew.-%.

Das Isobutenpolymerisat weist in der Regel einen Gehalt an endständigen Vinylidengruppen von mehr als 60 Mol-%, insbesondere mehr als 80 Mol-% auf. Die Dispersität M_{w}/Mₙ beträgt vorzugsweise nicht mehr als 2,0, insbesondere nicht mehr als 1,9.

Nach Erreichen des gewünschten Polymerisationsgrades wird der Katalysator abgetrennt und/oder deaktiviert und auf diese Weise die Polymerisation abgebrochen. Zur Katalysatordeaktivierung können Desaktivatoren, wie beispielsweise Wasser, Alkohole, Acetonitril, Ammoniak oder wässrige Lösungen von Mineralbasen oder Carbonaten, verwendet werden, die dem Reaktionsgemisch zugefügt werden. Hierzu können auch angesäuerte wässrige Lösungen verwendet werden. Anstatt den Katalysator im Reaktionsgemisch quantitativ zu deaktivieren, kann man ihn entweder quantitativ aus dem Reaktionsgemisch abtrennen oder teilweise aus dem Reaktionsgemisch abtrennen und den restlichen Katalysator im Reaktionsgemisch deaktivieren. Mit Vorteil erfolgt die Katalysatorabtrennung gemäß der Beschreibung der WO 99/31151.

Zur Abtrennung des Katalysators aus dem Reaktionsgemisch empfiehlt es sich, zuvor die Isobutenkonzentration auf weniger als 2 Gew.-%, vorzugsweise weniger als 1 Gew.-% und insbesondere weniger als 0,5 Gew.-%, bezogen auf das Reaktionsgemisch, zu verringern. Zur Abtrennung des Katalysators verwendet man bevorzugt lösliche Bortrifluorid-Komplex-Katalysatoren mit begrenzter Löslichkeit im Reaktionsgemisch und/oder kühlt das Reaktionsgemisch auf Temperaturen von beispielsweise 5 bis 30 Kelvin unterhalb der Reaktionstemperatur, vorzugsweise 10 bis 20 Kelvin unterhalb der Reaktionstemperatur, ab.

Durch die Verringerung der Isobutenkonzentration und/oder das Abkühlen sinkt die Löslichkeit des Katalysators im Reaktionsgemisch. Der Katalysator fällt in Form feinverteilter Tröpfchen an, die in der Regel rasch in eine kohärente Phase übergehen. Die Katalysatorphase hat eine höhere Dichte als die Polymerlösung und kann mit Hilfe von Abscheidern, Separatoren oder sonstigen Vorrichtungen von der Produktphase abgetrennt werden. Falls der Katalysator nur in Form feinstverteilter Tröpfchen anfällt, kann man sich üblicher Maßnahmen zur Tröpfchenvergrößerung, beispielsweise Koaleszierfilter, bedienen.

Im weiteren Gang der Aufarbeitung wird das Reaktionsgemisch zweckmäßigerweise einer oder mehreren Extraktionen - üblicherweise mit Wasser - zur Entfernung von Restmengen an Katalysator unterworfen.

Das Reaktionsgemisch wird dann destillativ von nicht umgesetztem Isobuten und/oder inertem Verdünnungsmittel befreit. Der Begriff "Destillation" ist weitestgehend zu verstehen und soll alle Vorgehensweisen umfassen, bei der das nicht umgesetzte Isobuten und/oder das Verdünnungsmittel als Gas bzw. Dampf von dem als Rückstand anfallenden Polyisobuten abgetrennt werden. Das gasförmige Isobuten und Verdünnungsmittel werden in der Regel kondensiert und in die Polymerisationsapparatur zurückgeführt. Unter Destillation sollen insbesondere eine isobare Erwärmung unter Abdampfen von Isobuten und/oder Verdünnungsmittel oder eine adiabatische Entspannung des - zweckmäßigerweise vorerwärmten - Reaktionsgemischs unter Bildung einer Gas- und einer Flüssigphase sowie Kombinationen von adiabatischer Entspannung und isobarer Erwärmung verstanden werden. Die Destillation erfolgt vorzugsweise unter verwendung von Kolonnen mit trennwirksamen Einbauten, wie Glokkenböden oder Füllkörperpackungen.

Die Destillation kann ein- oder mehrstufig, z. B. zweistufig, durchgeführt werden. Bei mehrstufiger Durchführung werden im ersten und gegebenenfalls weiteren Schritten die Hauptmenge des nicht umgesetzten Isobutens und/oder des Verdünnungsmittels entfernt, während im letzten Schritt die verbliebenen Reste des Isobutens und Verdünnungsmittels abdestilliert werden. Wird die Destillation mehrstufig durchgeführt, erfolgt der erfindungsgemäße Zusatz der Isobutenoligomere zumindest vor oder während des letzten Destillationsschritts. In den vorgelagerten Destillationsschritten ist die Viskosität des Destillationsguts aufgrund der Gegenwart vergleichsweise großer Mengen Isobuten und/oder Verdünnungsmittel meist hinreichend niedrig, so dass die eingangs geschilderten Probleme in den vorgelagerten Destillationsschritten meist nicht auftreten. Dennoch kann der Zusatz der Isobutenoligomere natürlich bereits vor oder während des ersten oder weiterer Destillationsschritte erfolgen.

In der bevorzugten Ausführungsform erfolgt eine weitgehende Entfernung des nicht umgesetzten Isobutens in einer ersten Destillation dadurch, dass man das Reaktionsgemisch erwärmt und in einen Entspannungsbehälter entspannt, wobei sich das Reaktionsgemisch infolge der Druckerniedrigung in eine die Hauptmenge des nicht umgesetzten Isobutens (und gegebenenfalls sonstiger niedrig siedender Bestandteile) und des inerten Verdünnungsmittels enthaltende Gasphase und eine geringe Menge nicht umgesetztes Isobuten, inertes Verdünnungsmittels und die Hauptmenge des Polyisobutens enthaltende Flüssigphase auftrennt. Die Druckdifferenz bei der Entspannung beträgt z. B. 5 bis 25 bar. Die in der Flüssigphase verbliebenen Reste von nicht umgesetzten Isobuten und inertem Verdünnungsmittel werden dann durch eine zweite Destillation abgetrennt. Vor oder im Verlauf der zweiten Destillation werden Isobutenoligomere zugegeben. Man führt die zweite Destillation zweckmäßigerweise in einer Kolonne durch, wobei das Polyisobuten als Sumpfprodukt anfällt. Die Sumpfheizung kann z. B. über einen eingebauten Aufheizer oder einen Umlaufwärmetauscher erfolgen. Vorzugsweise wird der Kolonnenzulauf vorerwärmt. Das Einleiten in die Kolonne kann unter Entspannung um z. B. 0,5 bis 5 bar, erfolgen. Die Isobutenoligomere werden zweckmäßigerweise dem Kolonnenzulauf zugefügt. Alternativ oder zusätzlich können die Isobutenoligomere auf einem beliebigen Kolonnenboden zugefügt werden. Selbstverständlich ist auch die Zugabe über mehrere Zugabeorte möglich.

Nach erfolgter destillativer Entfernung des nicht umgesetzten Isobutens und Verdünnungsmittels können die Isobutenoligomere gewünschtenfalls in einem weiteren Destillationsschritt, vorzugsweise unter Vakuum von z. B. weniger als 400 mbar, aus dem Polyisobuten wieder entfernt werden.

Die Isobutenoligomeren wirken als Fließ- und Siedehilfsmittel. Sie führen einerseits zu einer drastischen Verringerung der Viskosität des Destillationssumpfs und führen so zu einer Vergleichsmäßigung des Siedeverlaufs. Die Isobutenoligomeren führen zu einer verstärkten Brown'schen Molekularbewegung und brechen so die als thermische Isolatoren wirkenden zähflüssigen Grenzschichten des hochmolekularen Polyisobutens auf.

Die angestrebte Wirkung als Fließ- und Siedehilfsmittel wird nur durch Verwendung von Isobutenoligomeren eines bestimmten Molekulargewichts erreicht. Erfindungsgemäß werden solche eines Molekulargewichts von 112 bis 560, vorzugsweise 168 bis 392, verwendet.

Isobutenoligomere mit einem niedrigeren als dem angegebenen Molekulargewicht sind unerwünscht, weil sie aufgrund ihres niedrigen Siedepunkts rasch abdampfen und keine Wirkung als Siedehilfsmittel entfalten. Mit Isobutenoligomeren mit einem höheren Molekulargewicht wird die angestrebte Wirkung nicht erreicht, weil sich ihr Molekulargewicht nicht hinreichend von dem der höhermolekularen Isobutenpolymere unterscheidet.

Isobutenoligomere geeigneten Molekulargewichts kann man z. B. dadurch erhalten, dass man in einem getrennten Polymerisationsschritt gezielt niedermolekulares Isobutenpolymerisat herstellt und gegebenenfalls durch Destillation daraus eine geeignete Fraktion von Isobutenoligomeren gewinnt.

Besonders zweckmäßig benutzt man Isobutenoligomere, die bei der Herstellung von Isobutenpolymerisaten mit einem mittleren Molekulargewicht Mₘₐₓ' von 1000 bis 3000 anfallen. Entsprechend der natürlichen Molekulargewichtsverteilung dieser Isobutenpolymerisate (d. h. "unterhalb" der linken Anstiegsflanke der Verteilungskurve) werden auch Isobutenoligomere gebildet, die abgetrennt und wie beschrieben verwendet werden können.

Eine bevorzugte Ausgestaltung dieses Aspekts der Erfindung ist ein Verfahren, bei dem man
a) Isobuten in Gegenwart eines Lewis-Säure-Katalysators und gegebenenfalls eines inerten Verdünnungsmittels polymerisiert, bis ein erstes Isobutenpolymerisat mit Mₘₐₓ, von 1000 bis 3000 erhalten ist, den Katalysator abtrennt und/oder deaktiviert,
b) aus dem ersten Isobutenpolymerisat Isobutenoligomere mit einem Molekulargewicht von 112 bis 560 abtrennt,
c) getrennt davon Isobuten in Gegenwart eines Lewis-Säure-Katalysators und eines inerten Verdünnungsmittels polymerisiert, bis ein zweites Isobutenpolymerisat mit Mₘₐₓ von 3500 bis 8000 erhalten ist, den Katalysator abtrennt und/oder deaktiviert,
d) aus dem zweiten Isobutenpolymerisat das nicht umgesetzte Isobuten und/oder das Verdünnungsmittel durch Destillation abtrennt und vor oder im Verlauf der Destillation zu dem zweiten Isobutenpolymerisat die Isobutenoligomere aus Schritt b) gibt.

So kann man beispielsweise getrennt voneinander, z. B. in zwei unabhängig voneinander betriebenen Anlagen oder alternierend in einer Anlage, ein erstes Isobutenpolymerisat mit Mₘₐₓ, von etwa 2000 und ein zweites Isobutenpolymerisat mit Mₘₐₓ von etwa 4200 herstellen. Man trennt dann vom ersten Isobutenpolymerisat Isobutenoligomere mit einem Molekulargewicht von z. B. 168 bis 392 ab und gibt diese als Fließ- und Siedehilfsmittel im Sinne der vorliegenden Erfindung zu dem zweiten Isobutenpolymerisat.

Die Abtrennung der Isobutenoligomere vom ersten Isobutenpolymerisat erfolgt vorzugsweise durch Destillation im Vakuum bei einem Druck von z. B. weniger als 400 mbar. Geeignet ist auch eine zweistufige Abtrennung, wobei in einer ersten Stufe bei einem Druck von weniger als 400 mbar, z. B. etwa 200 mbar, und in einer zweiten Stufe bei einem Druck von weniger als 100 mbar, z. B. 20 mbar, gearbeitet wird. Die zur Abtrennung erforderliche Temperatur liegt in der Regel im Bereich von 120 bis 250 °C.

Zur Erzeugung eines Vakuums im angegebenen Druckbereich sind Flüssigkeitsringpumpen besonders geeignet. Bei diesen Pumpen befindet sich in einem kreisförmigen Schöpfraum eine sogenannte Sperrflüssigkeit. Ein exzentrisch gelagerter Rotor erzeugt infolge seiner Drehung einen Flüssigkeitsring. Dadurch bildet sich ein sichelförmiger freier Raum, der durch die Schaufeln des Rotors in mehrere Kammern unterteilt ist. Diese Kammern vergrößern sich zunächst während der Drehung des Rotors. Dadurch wird über entsprechende Öffnungen in den Seitenplatten Gas auf niedrigem Druckniveau in die Kammern gesaugt. Bei weiterer Drehung des Rotors wird das angesaugte Gas komprimiert und wiederum über Öffnungen in den Seitenplatten aus der Pumpe herausgedrückt. Als Sperrflüssigkeit wird vielfach Wasser verwendet. Die Verwendung von Wasser als Sperrflüssigkeit im vorliegenden Verfahren ist jedoch nachteilig, da im zu destillierenden Gut in der Regel Zersetzungsprodukt oder Folgeprodukte des Lewis-Säure-Katalysators, wie z. B. fluororganische Verbindungen, vorliegen, die bei der vorangegangenen Katalysatorabtrennung nicht vollständig entfernt wurden. Die fluororganischen Verbindungen können durch Wasser, das als Sperrflüssigkeit verwendet wird, zu Fluorwasserstoffsäure hydrolysiert werden. Diese Säure führt zu massiven Korrosionsschäden der Flüssigkeitsringpumpe. Daher ist es bevorzugt, anstelle von Wasser Isobutenoligomere als Sperrflüssigkeit zu verwenden. Damit vermeidet man außerdem die Verwendung sonstiger systemfremder Sperrflüssigkeiten, die in das Endprodukt gelangen und dessen Qualität beeinträchtigen können.

Nach destillativer Entfernung des nicht umgesetzten Isobutens und des Verdünnungsmittels bzw. nach Entfernung der zugesetzten Isobutenoligomere wird das als Sumpfprodukt erhaltene Polyisobuten von der Destillationstemperatur auf Lagertemperatur abgekühlt, indem dieses beispielsweise durch die Rohrschlangen eines Wärmetauschers geleitet wird. Typische Lagertemperaturen sind 40 bis 140 °C, meist 80 bis 140 °C. Aufgrund der Viskosität des Polyisobutens nimmt das Abkühlen teilweise sehr lange Zeit in Anspruch. Es wurde gefunden, dass der Wärmeübergang insbesondere durch isolierend wirkende laminare Randschichten gehindert wird. Zweckmäßigerweise wird die Kühlung erleichtert, wenn man Leitungsrohre, z. B. mit einem Durchmesser von 20 bis 30 mm, verwendet, die mit Einbauten, z. B. statischen Mischern, versehen sind, die die laminaren Randschichten zerstören. Besonders geeignet sind Mischer der Bezeichnung SMX der Fa. Sulzer.

Die Erfindung wird durch die folgenden Beispiele und beigefügten Figuren näher veranschaulicht.

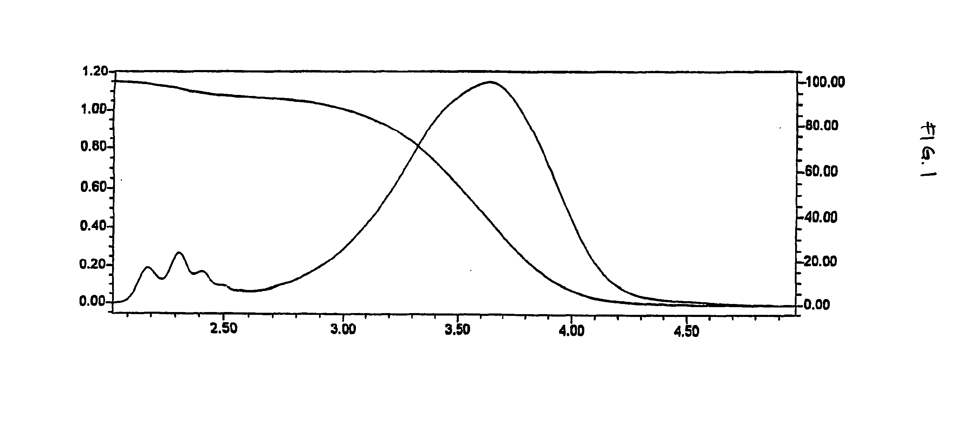

Fig. 1 zeigt die differentielle und kumulative Molekulargewichtsverteilungskurve einer erfindungsgemäßen Polyisobuten-Zusammensetzung. Auf der Abszisse ist der dekadische Logarithmus des Molekulargewichts aufgetragen; auf der linken Ordinate ist die Häufigkeit der jeweiligen Gewichtsklasse in willkürlichen Einheiten, auf der rechten Ordinate Gew.-% der kumulativen Verteilung aufgetragen. Die differentielle Kurve weist ein globales Maximum bei etwa 4200 auf. An der linken Anstiegsflanke sind drei lokale Maxima bei 168, 224 und 280 erkennbar. Die Fläche unter den lokalen Maxima entspricht etwa 10 Gew.-% der Polyisobuten-Zusammensetzung.

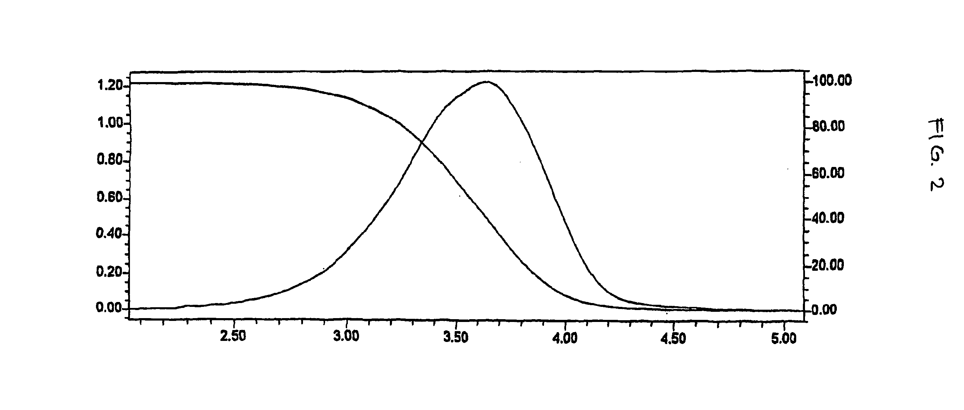

Fig. 2 zeigt die differentielle und kumulative Molekulargewichtsverteilungskurve der Polyisobuten-Zusammensetzung, aus der die Isobutenoligomere mittels Destillation entfernt worden sind.

### Beispiele

Zur Herstellung eines Polyisobutens wurde gemäß der EP-A-628 575, Beispiel 1, verfahren. Der eingesetzte Isobuten-Zulauf entsprach folgender Zusammensetzung:
- Isobutan < 1 Gew.-%
- n-Butan < 1 Gew.-%
- 1-Buten < 1 Gew.-%
- trans-2-Buten < 1 Gew.-%
- cis-2-Buten < 1 Gew.-%
- Isobuten 45 Gew.-%
- Hexan 54 Gew.-%
- Butadien < 50 ppm
- Wasser etwa 2 ppm

Im Verlauf einer Stunde wurden 6000 g des obigen Zulaufs auf der Saugseite eines Schlaufenreaktors zugeführt, der mit einer integrierten Umwälzpumpe ausgestattet war, dessen Rohrdurchmesser 30 mm und dessen Volumen 1000 ml betrug. Es wurden Bortrifluorid in einer Menge von 7,1 mmol/l Zulauf und 2-Butanol in 1,6-facher molarer Menge, bezogen auf Bortrifluorid, zugesetzt. Der Reaktor wurde so gekühlt, dass die Temperatur im Reaktionsmedium -17 °C betrug. Die mittlere Verweilzeit des Reaktionsmediums im Reaktor betrug 6,6 Minuten. Der Reaktionsaustrag wurde mit 2000 g/h Wasser von 90 °C intensiv vermischt, wobei sich eine Temperatur zwischen 35 und 45 °C einstellte. Anschließend trennte man die beiden entstehenden Phasen. Die obere Phase (im Folgenden "Rohprodukt" genannt) bestand aus Polyisobuten, nicht umgesetztem Isobuten und Hexan.

Das zuvor beschriebene Rohprodukt wurde über einen Wärmetauscher geleitet, wobei sich eine Temperatur von 140 °C und ein Druck von 14 bar einstellte. Das erhitzte Rohprodukt wurde dann in einen Entspannungsbehälter auf 3,2 bar entspannt. Dabei verdampfte die Hauptmenge an nicht umgesetztem Isobuten und Hexan und wurde als Gasphase am Kopf des Entspannungsbehälters abgezogen. Die Flüssigphase kühlte sich dabei auf 100 °C ab.

Die erhaltene Flüssigphase wurde zur Entfernung des restlichen nicht umgesetzten Isobutens und des restlichen Hexans einer Destillationskolonne zugeführt. Der zu destillierenden Flüssigphase wurden unterschiedliche Mengen Isobutenoligomere als Siede- und Fließhilfsmittel bzw. Hexan (Vergleich) zugesetzt (siehe nachstehende Tabelle). Die zugesetzten Isobutenoligomere hatten folgende Zusammensetzung: 1,6 Gew.-% C₈-Oligomer, 2,8 Gew.-% C₁₂-Oligomer, 28,1 Gew.-% C₁₆-Oligomer, 35,3 Gew.-% C₂₀-Oligomer, 21,6 Gew.-% C₂₄-Oligomer, 8,2 Gew.-% C₂₈-Oligomer, 1,8 Gew.-% höhermolekulare Bestandteile und 0,6 Gew.-% Hexan.

Die Flüssigphase (gegebenenfalls mit zugesetztem Siede- und Fließhilfsmittel) wurde mit Hilfe eines Wärmetauschers, der mit wasserdampf von 22 bar und etwa 220 °C beheizt wurde, erwärmt. Der Wärmeübergang war abhängig von der Viskosität der Flüssigphase, die ihrerseits von der Menge an zugesetztem Siede- und Fließhilfsmittel abhing. Unter ansonsten gleichen Bedingungen stellte sich eine unterschiedliche Temperatur in dem erwärmten Gemisch ein (siehe nachstehende Tabelle).

Die erhitzte Flüssigphase wurde unter Entspannung auf 1 bar in eine Destillationskolonne eingeführt. Es ging ein Destillat mit einem Siedepunkt von 72 °C über. Die Temperatur des Destillationssumpfs wurde mit Hilfe eines Umlaufwärmetauschers (Wasserdampf 22 bar; 220 °C) auf 180 °C gehalten. In Abhängigkeit von der zugesetzten Menge an Siede- und Fließhilfsmittel kam es zu mehr oder weniger Schaumbildung in der Kolonne. Bei den Vergleichsbeispielen 1 und 5 lief die Kolonne sehr unruhig und stoßend und es gelangten Teile des Sumpfprodukts in Form von Schaum in das Destillat. Das Molekulargewicht Mₘₐₓ des erhaltenen Polyisobutens betrug in allen Beispielen etwa 4200.

| Beispiel | Isobuten-oligomere g/h | Temperatur des erwärmten Gemischs °C | Beobachtung | M̅_{N} *) | Dispersität |
|---|---|---|---|---|---|
| 1 (Vergleich) | 0 | 153 | viel zäher Schaum, stoßender Betrieb | 2465 | 1,803 |
| 2 | 50 | 172 | wenig Schaum | 2453 | 1,834 |
| 3 | 100 | 183 | wenig Schaum | 2449 | 1,853 |
| 4 | 150 | 184 | wenig Schaum | 2444 | 1,863 |
| 5 (Vergleich) | Hexan: 100 | 187 | viel Schaum | 2460 | 1,796 |

| | | | | | |
|---|---|---|---|---|---|
| *) M̅_{N}: zahlenmittleres Molekulargewicht | | | | | |

Um die als Siede- und Fließhilfsmittel zugesetzten Isobutenoligomere wieder zu entfernen, wurde der Destillationssumpf in einen Entspannungsbehälter geleitet, der unter Unterdruck (200 mbar) stand. Der Sumpf des Entspannungsbehälters wurde kontinuierlich über einen Wärmetauscher (Wasserdampf 22 bar; etwa 220 °C) gepumpt und auf 180 °C gehalten. Die oligomeren Bestandteile wurden so weitgehend abgetrennt und befanden sich anschließend im Destillat. Das Sumpfprodukt stellte das gewünschte Endprodukt Polyisobuten dar.

## Patentansprüche

1. Polyisobuten-Zusammensetzung mit einem globalen Maximum der differentiellen Molekulargewichtsverteilungskurve bei einem Molekulargewicht Mₘₐₓ von 3500 bis 8000, **gekennzeichnet durch** wenigstens ein lokales Maximum bei einem Molekulargewicht von 112 bis 560.

2. Polyisobuten-Zusammensetzung nach Anspruch 1, **dadurch gekennzeichnet, dass** wenigstens 80 Gew.-% der Zusammensetzung von Molekülen mit einem Molekulargewicht im Bereich des 0,25- bis 2,5-fachen vom Mₘₐₓ gebildet werden.

3. Polyisobuten-Zusammensetzung nach Anspruch 1 oder 2, **dadurch gekennzeichnet, dass** die Fläche unter den lokalen Maxima 0,1 bis 12 Gew.-% der Zusammensetzung entspricht.

4. Polyisobuten-Zusammensetzung nach einem der vorhergehenden Ansprüche, **gekennzeichnet durch** wenigstens ein lokales Maximum bei einem Molekulargewicht von 168 bis 392.

5. Verfahren zur Herstellung von Polyisobuten, bei dem man Isobuten in Gegenwart eines Lewis-Säure-Katalysators und eines inerten Verdünnungsmittels polymerisiert, bis ein Isobutenpolymerisat mit einem Maximum der differentiellen Molekulargewichtsverteilungskurve bei einem Molekulargewicht Mₘₐₓ von 3500 bis 8000 erhalten ist, den Katalysator abtrennt und/oder deaktiviert, und das nicht umgesetzte Isobuten und/oder das Verdünnungsmittel durch Destillation abtrennt, **dadurch gekennzeichnet, dass** man vor oder im Verlauf der Destillation zu dem Isobutenpolymerisat Isobutenoligomere mit einem Molekulargewicht von 112 bis 560 zugibt.

6. Verfahren nach Anspruch 5, bei dem der Lewis-Säure-Katalysator Bortrifluorid umfasst.

7. Verfahren nach Anspruch 5 oder 6, bei dem man
a) Isobuten in Gegenwart eines Lewis-Säure-Katalysators und gegebenenfalls eines inerten Verdünnungsmittels polymerisiert, bis ein erstes Isobutenpolymerisat mit Mₘₐₓ, von 1000 bis 3000 erhalten ist, den Katalysator abtrennt und/oder deaktiviert,
b) aus dem ersten Isobutenpolymerisat Isobutenoligomere mit einem Molekulargewicht von 112 bis 560 abtrennt,
c) getrennt davon Isobuten in Gegenwart eines Lewis-Säure-Katalysators und eines inerten Verdünnungsmittels polymerisiert, bis ein zweites Isobutenpolymerisat mit Mₘₐₓ von 3500 bis 8000 erhalten ist, den Katalysator abtrennt und/oder deaktiviert,
d) aus dem zweiten Isobutenpolymerisat das nicht umgesetzte Isobuten und/oder das Verdünnungsmittel durch Destillation abtrennt und vor oder im Verlauf der Destillation zu dem zweiten Isobutenpolymerisat die Isobutenoligomere aus Schritt b) gibt.

## Claims

1. A polyisobutene composition having a global maximum of the differential molecular weight distribution curve at a molecular weight Mₘₐₓ of from 3 500 to 8 000, which comprises at least one local maximum at a molecular weight of from 112 to 560.

2. A polyisobutene composition as claimed in claim 1, wherein at least 80% by weight of the composition are formed by molecules having a molecular weight of from 0.25 to 2.5 times Mₘₐₓ.

3. A polyisobutene composition as claimed in claim 1 or 2, wherein the area under the local maxima corresponds to from 0.1 to 12% by weight of the composition.

4. A polyisobutene composition as claimed in any of the preceding claims, which comprises at least one local maximum at a molecular weight of from 168 to 392.

5. A process for the preparation of polyisobutene, in which isobutene is polymerized in the presence of a Lewis acid catalyst and of an inert diluent until an isobutene polymer having a maximum of the differential molecular weight distribution curve at a molecular weight Mₘₐₓ of from 3 500 to 8 000 is obtained, the catalyst is separated off and/or deactivated and the unconverted isobutene and/or the diluent are separated off by distillation, wherein isobutene oligomers having a molecular weight of from 112 to 560 are added to the isobutene polymer before or in the course of the distillation.

6. A process as claimed in claim 5, in which the Lewis acid catalyst comprises boron trifluoride.

7. A process as claimed in claim 5 or 6, in which
a) isobutene is polymerized in the presence of a Lewis acid catalyst and, if required, of an inert diluent until a first isobutene polymer having an Mₘₐₓ, of from 1 000 to 3 000 is obtained, and the catalyst is separated off and/or deactivated,
b) isobutene oligomers having a molecular weight of from 112 to 560 are separated from the first isobutene polymer,
c) separately therefrom, isobutene is polymerized in the presence of a Lewis acid catalyst and of an inert diluent until a second isobutene polymer having an Mₘₐₓ of from 3 500 to 8 000 is obtained, and the catalyst is separated off and/or deactivated, and
d) the unconverted isobutene and/or the diluent are separated from the second isobutene polymer by distillation and the isobutene oligomers from step b) are added to the second isobutene polymer before or in the course of the distillation.

## Revendications

1. Composition de polyisobutène comportant un maximum global de la courbe différentielle de répartition de poids moléculaire pour un poids moléculaire Mₘₐₓ de 3500 à 8000, **caractérisée par** au moins un maximum local pour un poids moléculaire de 112 à 560.

2. Composition de polyisobutène selon la revendication 1, **caractérisée en ce qu'**au moins 80 % en poids de la composition sont formés de molécules ayant un poids moléculaire dans la plage de 0,25 fois à 2 , 5 fois Mₘₐₓ.

3. Composition de polyisobutène selon la revendication 1 ou 2, **caractérisée en ce que** la surface présente sous les maxima locaux correspond à 0,1 à 12 % en poids de la composition.

4. Composition de polyisobutène selon l'une quelconque des revendications précédentes, **caractérisée par** au moins un maximum local pour un poids moléculaire de 168 à 392.

5. Procédé de préparation de polyisobutène, dans lequel de l'isobutène est polymérisé en présence d'un catalyseur à l'acide de Lewis et d'un milieu de dilution inerte, jusqu'à ce qu'un polymère d'isobutène comportant un maximum de la courbe différentielle de répartition de poids moléculaire pour un poids moléculaire Mₘₐₓ de 3500 à 8000 soit obtenu, le catalyseur est isolé et/ou désactivé, et l'isobutène non réagi et/ou le milieu de dilution est isolé par distillation, **caractérisé en ce que** des oligomères d'isobutène ayant un poids moléculaire de 112 à 560 sont ajoutés au polymère d'isobutène avant ou au cours de la distillation.

6. Procédé selon la revendication 5, dans lequel le catalyseur à l'acide de Lewis comporte du trifluorure de bore.

7. Procédé selon la revendication 5 ou 6, comportant les étapes consistant à :
a) polymériser de l'isobutène en présence d'un catalyseur à l'acide de Lewis et éventuellement d'un milieu de dilution inerte, jusqu'à ce qu'un premier polymère d'isobutène ayant un poids moléculaire M_{max'} de 1000 à 3000 soit obtenu, isoler et/ou désactiver le catalyseur,
b) isoler des oligomères d'isobutène ayant un poids moléculaire de 112 à 560 à partir du premier polymère d'isobutène,
c) polymériser de l'isobutène séparément en présence d'un catalyseur à l'acide de Lewis et d'un milieu de dilution inerte, jusqu'à ce qu'un deuxième polymère d'isobutène ayant un poids moléculaire Mₘₐₓ de 3500 à 8000 soit obtenu, isoler et/ou désactiver le catalyseur,
d) isoler l'isobutène non réagi et/ou le milieu de dilution par distillation à partir du deuxième polymère d'isobutène et ajouter les oligomères d'isobutène issus de l'étape b) au deuxième polymère d'isobutène avant ou au cours de la distillation.
